# EUROPÄISCHE PATENTSCHRIFT

(11) **EP 0 797 365 B1**
(45) Veröffentlichungstag und Bekanntmachung des Hinweises auf die Patenterteilung: **12.10.2005**
(21) Anmeldenummer: 96111508.6
(22) Anmeldetag: 17.07.1996
(51) Int. Cl.: H04Q 7/10

(54) **Verfahren zur Verbreitung von Mehrwertinformationen**
Method for the processing of added value information
Méthode pour le traitement des informations valorisées

(30) Priorität: 18.03.1996 DE 19610506
(43) Veröffentlichungstag der Anmeldung: 24.09.1997
(73) Patentinhaber: T-Mobile Deutschland GmbH, 53227 Bonn (DE)
(72) Erfinder: Daniel, Peter, 64342 Seeheim-Jugenheim (DE); Schmidt, Andreas, 64747 Breuberg (DE); Meinert, Rainer, 53881 Euskirchen (DE); Brambach, Dirk, 50937 Köln (DE)
(74) Vertreter: Riebling, Peter

(56) Entgegenhaltungen:
- EP-A- 0 360 228
- EP-A- 0 570 937
- EP-A- 0 680 024
- WO-A-90/15512
- US-A- 4 369 443
- US-A- 4 818 987
- US-A- 5 241 305
- US-A- 5 450 071

## Beschreibung

Die vorliegende Erfindung befaßt sich mit einem Verfahren zur Verbreitung von Mehrwertinformationen auf Basis der bekannten standardisierten Codeformate für Funkrufdienste (POCSAG, ERMES), nach dem Oberbegriff des Patentanspruchs 1.

Es sind verschiedene Funkrufdienste bekannt (RDS, Eurosignal, Cityruf, Scall), welche vor allem für die Aussendung von kundenspezifischen Nachrichten genutzt werden. Jedem Kunden ist dabei ein eigener sogenannter Adresscode zugeordnet, der in Fachkreisen mit RIC (Radio Identification Code) bezeichnet wird, unter welchem der Kunde direkt angerufen werden kann. Für den Empfang von allgemeinen, alphanumerischen Mehrwertinformationen im Broadcast-Betrieb sind diese bekannten Verfahren nicht oder nur sehr eingeschränkt geeignet. Bekannte Funktionen, wie z.B. Gruppenruf oder Maildrop, genügen nicht mehr den Ansprüchen der Anbieter von Mehrwertinformationen, der Netzbetreiber und den Endkunden.

Die US-A-5 241 305 offenbart ein sogenanntes Inforuf-System, welches neben dem Empfang des eigentlichen Funkrufs auch einen Empfang von Zusatzinformationen ermöglicht. Dies wird durch ein spezielles Verwaltungssystem erreicht, welches eine Unterscheidung trifft zwischen Funkruf- und Informationsruf-Daten. Dabei wird eine Frequenz für die Übertragung des Funkrufs und der Zusatzdienste verwendet, wobei der Empfänger unterscheidet, ob die empfangenen Daten einen Funkruf oder einen Inforuf enthalten. Die Gruppierungen (Multi-Level-Group-Messaging) beziehen sich auf elektronische Seriennummern, die im System definiert sind, und über welche die Empfänger angesprochen werden können. Die Programme werden also durch bestimmte Dateninhalte definierter Codeworte adressiert.

Die Freigabe bestimmter Informationen erfolgt über einen definierten Befehl des Systems, wobei der individuelle Empfänger über seine elektronische Seriennummer angesprochen wird.

In der EP 0 360 228 A2 ist ein Paging-Empfänger offenbart, bei dem der Empfang von Nachrichten in bekannter Weise durch den Empfang von sogenannten Frames und Adresscodes gesteuert wird. Der Empfang von Mehrwertdiensten im speziellen ist nicht beschrieben.

Um den Markterfordernissen gerecht zu werden, besteht Bedarf an einem standardisierten Verfahren, welches für die Übertragung und Auswertung von Mehrwertinformationen geeigneter ist.

Der vorliegenden Erfindung liegt die Aufgabe zugrunde, ein Verfahren zur Verbreitung von Mehrwertinformationen so weiterzubilden, daß wesentlich erweiterte Möglichkeiten zur Übertragung und Auswertung von Informationen über Funkrufdienste bereitgestellt werden können, wobei eine Kompatibilität zu den bisher bekannten Funkruf-Codeformaten und Endgeräten erhalten bleiben soll. Gelöst wird diese Aufgabe durch die kennzeichnenden Merkmale des Patentanspruchs 1.

Wesentliches Merkmal ist, daß erfindungsgemäss pro genutzte Funkruffrequenz ein Adresscode-Pool zur Verfügung gestellt wird, der beginnend mit einem Referenz-Adresscode eine festgelegte Anzahl an Adresscodes für die Übertragung von Mehrwertinformationen enthält.

Pro Funkruffrequenz können z.B. unter Anwendung des POCSAG-Standards etwa 2 Millionen Adresscodes (RICs) verwendet werden, d.h. zwei Millionen Endkunden angesprochen werden. Von den 2 Millionen RICs werden erfindungsgemäss eine Anzahl, z.B. 100 Stück, zur Verbreitung von Mehrwertinformationen reserviert. Diese 100 RICs bilden den Adresscode-Pool.

Aus technischen Gründen (Energiesparmodus der Endgeräte) ist es vorteilhaft, wenn die für die Mehrwertausbreitung reservierten Adresscodes nicht fortlaufend codiert sind, sondern immer einen Abstand (Offset) voneinander haben, der z.B. 8 beträgt. Das heißt, von einem Referenz-Adresscode aus gesehen ist jeder 8. Adresscode für die Verbreitung von Mehrwertinformationen reserviert. Dadurch entsteht ein "Kanalraster", wobei der Adresscode als "Kanal" und der Offset als "Kanalabstand" angesehen wird.

Der Adresscode-Pool (die Kanäle) wird in drei Abschnitte geteilt, wobei der erste die Kanäle umfaßt, die generell, ohne Aktivierung, kostenlos empfangen werden dürfen. Der zweite Abschnitt umfaßt die Kanäle, die als Gruppe, nach einer Erst-Aktivierung, kostenlos empfangen werden dürfen. Der dritte Bereich umfaßt Kanäle, die einzeln nur nach Aktivierung empfangen werden dürfen.

Der Netzbetreiber belegt entweder selbst bestimmte Kanäle mit Mehrwertthemen bzw. vergibt Informationsanbietern die Erlaubnis, auf bestimmten Kanälen Informationen auszusenden. Die Belegung der Kanäle wird in einer Programmübersicht kommuniziert. Kostenpflichtige Programme (Sonderkanäle) werden entsprechend markiert. Zur Durchführung des erfindungsgemässen Verfahrens sind in der Regel herkömmliche Funkrufempfänger geeignet, ohne daß größere Modifikationen an ihnen vorgenommen werden müßten. Bekannte Funkrufempfänger besitzen mehrere Programmplätze, in welchen jeweils bestimmte Adresscodes (RICs) gespeichert werden können. Die Programmplätze können nun erfindungsgemäß vom Benutzer selbst mit dem jeweils gewünschten Adresscode oder Adresscode-Pool programmiert werden. Der Empfänger besitzt eine "Kanalmatrix", in der die zu empfangenden kostenlosen und die vom Kunden gebuchten, kostenpflichtigen Kanäle, z.B. in einem EEPROM-Speicher, abgelegt sind. Pro Programmplatz im Empfänger kann ein in der Kanalmatrix eingetragener Kanal einprogrammiert werden. Der Empfänger ermittelt dann selbständig über einen Algorithmus aus dem Referenz-Adresscode und dem bekannten Offset den dem Kanal zugeordneten Adresscode für diesen Programmplatz und programmiert diesen ein.

Die Kanalfreigabe bzw. -sperrung von kostenpflichtigen Programmen geschieht durch Eingbe eines Programmierbefehls in den Empfänger. Dies kann durch Aussendung per Funk erfolgen oder auf jedem anderen bekannten technischen Weg wie Eingabe über Tastenfelder, kapazitiv, induktiv, optisch, akustisch, durch leitende Verbindung etc. Der Kanal wird dann vom Empfänger selbständig in die Kanalmatrix eingetragen bzw. gelöscht. Pro Kanal bzw. Kanalgruppe wird mit dem Aktivierungsbefehl ein Aktivierungsenddatum eingegeben, das in der Kanalmatrix abgelegt wird. Nach jeder Zeitsynchronisation (z.B. beim Einschalten) werden diejenigen Kanäle aus der Matrix gelöscht, für die das Aktiverungsenddatum abgelaufen ist. Es ist vorgesehen, auf jedem Kanal zyklisch eine Nachricht auszusenden, die das Thema dieses Kanals beinhaltet. Die zyklische Nachricht kann durch einen bestimmten Header von "normalen" Nachrichten zu diesem Thema unterschieden werden.

Der Vorteil des beschriebenen Verfahrens liegt darin, daß mit einfachsten Mitteln, unter Ausnutzung der bestehenden Funkruf-Codierstandards und Benutzung bereits erhältlicher Funkrufempfänger ein flexibles und umfängreiches Mehrwertinformations-Angebot realisiert werden kann.

Anhand des Anhangs soll die Erfindung noch näher erläutert werden. Im Anhang ist eine Adresscode-Übersicht gezeigt, wie sie bei Anwendung des Verfahrens aussehen könnte. Zuoberst ist der Aufbau des Adresscodes 1 dargestellt, welcher als individueller Adresscode jedem Benutzer bzw. Endgerät zugeordnet ist.
Dieser individuelle Adresscode ist fest im Endgerät einprogrammiert und beinhaltet vorzugsweise mehrere Subadressen 1 bis 4, welche eine unterschiedliche Nutzung durch Numerik-, Ton- oder Alphanumerik-Signale zulassen.

Der Adresscode 2 kann z.B. als Gruppenruf-Adresscode verwendet werden, der einer Gruppe von Benutzern zugeordnet wird und fest im Endgerät einprogrammiert ist. Der Gruppenrufadresscode ist optional und insbesondere für Firmen oder andere Benutzergruppen interessant. Über diesen Adresscode kann die gesamte Benutzergruppe unter dem selben Adresscode angerufen werden. Auch dieser Adresscode ist vorzugsweise in Subadressen unterteilt, die verschiedene Funktionen übernehmen können.

Dem Adresscode 3 ist im Beispiel der Referenz- oder Master-Adresscode zugeordnet, welcher gleichzeitig als Programmier-Adresscode dient und fest im Endgerät einprogrammiert ist. Dieser Programmier-Adresscode dient zur Übertragung von Protokollier- und Programmiersignalen, z.B. zur Sperrung oder Freischaltung bestimmter Mehrwertinformationen.

Das Funkrufendgerät weist neben den fest einprogrammierten Adresscodes 1 bis 3 weitere Programmplätze 4 bis n auf, welche die freien Adresscodeplätze darstellen und vom Anwender selbst individuell programmierbar sind. Die Kanäle, die den freien Adresscodeplätzen zugeordnet werden können, sind in der sogenannten Kanalmatrix abgelegt. Die Kanalmatrix bestimmt, welche Kanäle vom Empfänger aus gewählt werden dürfen. Im Beispiel sind Kanäle 1 bis 50 als kostenlose Kanäle bezeichnet, d.h. jeder Nutzer des Funkrufdienstes kann, ohne Aktivierung durch den Netzbetreiber, generell kostenlos auf diese Kanäle zugreifen und eine beliebige Auswahl dieser Kanäle in seinem Endgerät speichern. Diese Speicherung kann er jederzeit löschen und durch andere beliebige Kanäle ersetzen. Der 51. Kanal, hier bezeichnet als Sonderkanal X, und eine Anzahl folgender Kanäle können als Gruppe, nach Aktivierung, kostenlos empfangen werden. Diesen Kanälen kann ein Aktivierungsenddatum zugeordnet werden, so daß diese Kanäle nur während eines gewissen Zeitraumes empfangen werden können. Der Sonderkanal Y ist z.B. ein erster, vom Kunden gebuchter Kanal. Diese individuell vom Kunden zu buchende Kanäle sind in der Regel kostenpflichtig und können nur nach Aktivierung empfangen werden. Auch hier kann jedem Kanal eine Aktivierungsenddatum zugeordnet werden, wodurch die Kanäle nur während eines gewissen Zeitraums, z.B. während des Buchungszeitraumes, durch den Kunden, empfangen werden können.

Im Anhang ist ein Beispiel der Zuordnung von Themen zu Speicherplätzen bzw. Kanälen und Adresscodes gezeigt. Zum Beispiel werden auf Kanal 1 Sportinformationen kostenlos übertragen, wobei Kanal 1 zum Beispiel im Adresscode 6000000 zugeordnet ist. Mit einem Offset von 8 sind den Adresscodes weitere Kanäle 2 bis 99 zugeordnet. Die Kanäle 1 bis 50 stellen dabei kostenlose Kanäle dar, wobei die Kanäle 51 bis 99 teilweise kostenpflichtige Sonderkanäle darstellen, deren Benutzung vom Anwender beantragt werden muß.

Vorteil des beschriebenen Verfahrens zur Nutzung von Mehrwertinformationen ist, daß ohne Bereitstellung neuartiger Empfänger und ohne zusätzlichen Hardware-Aufwand eine fast beliebige Anzahl von Mehrwertinformationen angeboten und empfangen werden können.

### Anhang

### Adresscode Übersicht

### Adresscode 1: Individueller Adresscode Fest programmiert durch Netzbetreiber

| Subadresse | Rufklasse | Nutzung |
|---|---|---|
| 1 | N/T | Numerik/Ton |
| 2 | T | Ton |
| 3 | T | Ton |
| 4 | AN/T | Alphanumerik/Ton |

### Adresscode 2: Gruppenruf-Adresscode, reserviert (optional) Fest programmiert durch Netzbetreiber

| Subadresse | Rufklasse | Nutzung |
|---|---|---|
| 1 | N/T | Numerik/Ton |
| 2 | T | Ton |
| 3 | T | Ton |
| 4 | AN/T | Alphanumerik/Ton |

### Adresscode 3: Referenz-Adresscode und Programmier-Adresscode Fest programmiert durch Netzbetreiber

| Subadresse | Rufklasse | Nutzung |
|---|---|---|
| 1 | | |
| 2 | | |
| 3 | | |
| 4 | AN | Protokollübertragung |

### Kanalmatrix

Die Kanalmatrix bestimmt, welche Kanäle vom Empfänger ausgewählt werden dürfen

| Kanal oder Kanal-Bereich | Parameter | Endedatum | Nutzung |
|---|---|---|---|
| 1 - 4 | aktiv | (immer aktiv) blank | default freigeschaltete Kanäle |
| 5-50 | aktiv | 01.01.98 | kostenlose Programme, nach erstmaliger Aktivierung |
| Sonderkanal X | programmierbar | 15.05.97 | 1. gebuchter, kostenpflichtiger Kanal |
| | | | |
| Sonderkanal Y | programmierbar | 15.05.97 | n. gebuchter, kostenpflichtiger Kanal |

### Beispiel der Zuordnung von Themen zu Kanälen und Adresscodes Kanalabstand = 8

| Kostenlose Programme | Kanal | Adresscode |
|---|---|---|
| Sport | 1 | 6000000 |
| Kultur | 2 | 6000008 |
| Wetter | 3 | 6000016 |
| ... | ... | ... |
| letztes kostenloses Programm | 50 | 6000392 |
| Kostenpflichtige Progamme | Kanal | Adresscode |
| Aktien | 51 | 6000400 |
| ... | ... | ... |
| letztes kostenpflichtiges Programm | 99 | 6000784 |

## Patentansprüche

1. Verfahren zur Verbreitung von Mehrwertinformationen auf Basis standardisierter Codeformate für Funkrufdienste, bei dem auf einer oder mehreren Frequenzen mittels eines Adresscodes, welcher die Identität eines bestimmten Empfängers festlegt, dem Empfänger eine Nachricht übermittelt werden kann, wobei jeder Gruppe oder jedem Thema von Mehrwertinformationen jeweils mindestens ein weiterer Adresscode zugeordnet ist, welcher von mehreren Empfängern gleichzeitig ausgewählt und empfangen werden kann, wobei pro genutzte Funkruffrequenz ein Adresscode-Pool zur Verfügung gestellt wird,
**dadurch gekennzeichnet,**
**dass** der Adresscode-Pool in drei Abschnitte unterteilt ist, wobei ein erster Abschnitt Kanäle umfaßt, auf die seitens des Empfängers generell, ohne Aktivierung, kostenlos zugegriffen werden kann, ein zweiter Abschnitt Kanäle umfaßt, auf die als Gruppe, nach einer Erst-Aktivierung, kostenlos zugegriffen werden kann und ein dritter Abschnitt Kanäle umfaßt, auf die einzeln nur nach Aktivierung zugegriffen werden kann.

2. Verfahren nach Anspruch 1, **dadurch gekennzeichnet, daß** die Adresscodes pro genutzter Frequenz zusammen den Adresscode-Pool bilden, der jedem Benutzer des Funkrufdienstes zur Verfügung steht.

3. Verfahren nach einem der Ansprüche 1 oder 2, **dadurch gekennzeichnet, daß** innerhalb des Adresscode-Pools ein Referenz-Adresscode festgelegt ist, von dem aus weitere Adresscodes jeweils ein vielfaches eines vereinbarten Offset haben.

4. Verfahren nach Anspruch 3, **dadurch gekennzeichnet, daß** jeder zu empfangenden Mehrwertinformation ein Kanal zugeordnet ist, welcher einem bestimmten Adresscode des Adresscode-Pools entspricht, wobei jeder einem Kanal zugeordnete Adresscode durch Angabe des Referenz-Adresscodes und des zugehörigen Offsets bestimmt werden kann.

5. Verfahren nach einem der Ansprüche 1 bis 4, **dadurch gekennzeichnet, daß** die Kanäle zum Empfangen der Mehrwertinformationen in kostenlose und kostenpflichtige Kanäle aufgeteilt sind.

6. Verfahren nach einem der Ansprüche 1 bis 5, **dadurch gekennzeichnet, daß** eine Übertragung der Mehrwertinformationen im Textformat erfolgt.

7. Verfahren nach einem der Ansprüche 1 bis 6, **dadurch gekennzeichnet, daß** eine individuelle Freigabe aller kostenpflichtigen Kanäle über nur einen bestimmten Adresscode erfolgt.

8. Verfahren nach einem der Ansprüche 1 bis 7, **dadurch gekennzeichnet, daß** einzelnen oder Gruppen von kostenpflichtigen Kanälen ein Aktivierungsenddatum zugeordnet wird, durch welches die Nutzungsdauer von kostenpflichtigen Kanäle beschränkt wird.

9. Verfahren nach Anspruch 8, **dadurch gekennzeichnet, daß** vom Empfänger vor dem Empfang von Kanälen eine Zeitsynchronisation durch Empfang des aktuellen Datums durchgeführt wird, wobei Kanäle, deren Aktivierungsenddatum abgelaufen ist, nach jeder Zeitsynchronisation aus der Kanalmatrix gelöscht werden.

10. Verfahren nach einem der Ansprüche 3 bis 9, **dadurch gekennzeichnet, daß** ein für das Verfahren geeigneter Empfänger zum Empfang der Mehrwertinformationen ausgehend von dem erwünschten Kanal, einem bekannten Referenz-Adresscode und dem Offset den zum Kanal gehörigen Adresscode ermittelt.

11. Verfahren nach einem der Ansprüche 1 bis 10, **dadurch gekennzeichnet, daß** im Empfänger durch den Benutzer die gewünschten Kanäle in Gruppen, jeweils in der Anzahl von programmierbaren Speicherplätzen, eingespeichert werden.

## Claims

1. Method for the distribution of value-added information on the basis of standardised code formats for radio paging services, in which a message can be transmitted to a particular receiver on one or more frequencies by means of an address code which fixes the identity of the receiver, wherein each group or each subject of value-added information is assigned at least one further address code which can be simultaneously selected and received by several receivers, wherein an address code pool is made available for each radio paging frequency used, **characterised in that** the address code pool is divided into three sections, wherein a first section includes channels which can be accessed by the receiver generally, without activation, free of charge, a second section includes channels which can be accessed as a group, after an initial activation, free of charge, and a third section includes channels which can be accessed individually only after activation.

2. Method according to claim 1, **characterised in that** the address codes for each frequency used together form the address code pool which is available to every user of the radio paging service.

3. Method according to one of claims 1 or 2, **characterised in that** within the address code pool is fixed a reference address code from which further address codes in each case have a multiple of an agreed offset.

4. Method according to claim 3, **characterised in that** each item of value-added information to be received is assigned a channel which corresponds to a particular address code of the address code pool, wherein each address code assigned to a channel can be determined by indicating the reference address code and the associated offset.

5. Method according to one of claims 1 to 4, **characterised in that** the channels for receiving the value-added information are divided into free and pay channels.

6. Method according to one of claims 1 to 5, **characterised in that** transmission of the value-added information is effected in text format.

7. Method according to one of claims 1 to 6, **characterised in that** individual clearance of all pay channels is effected via only one particular address code.

8. Method according to one of claims 1 to 7, **characterised in that** individual or groups of pay channels are assigned an activation end date, by which the period of use of pay channels is limited.

9. Method according to claim 8, **characterised in that** time synchronisation is carried out by the receiver before the reception of channels, by reception of the current date, wherein channels of which the activation end date has expired are deleted from the channel matrix after each time synchronisation.

10. Method according to one of claims 3 to 9, **characterised in that** a receiver suitable for the method for the reception of the value-added information determines, starting from the desired channel, a known reference address code and the offset, the address code belonging to the channel.

11. Method according to one of claims 1 to 10, **characterised in that** in the receiver the desired channels are stored by the user in groups, in each case in the number of programmable storage locations.

## Revendications

1. Procédé pour la diffusion d'informations à valeur ajoutée sur la base de formats de codes normalisés pour des services radioélectriques d'appel, selon lequel un message peut être transmis au récepteur sur une ou plusieurs fréquences, à l'aide d'un code d'adresse qui détermine l'identité d'un récepteur défini, étant précisé qu'on affecte à chaque groupe ou à chaque thème d'informations à valeur ajoutée au moins un autre code d'adresse qui peut être sélectionné et reçu en même temps par plusieurs récepteurs, une mémoire commune de codes d'adresse étant fournie pour chaque fréquence radioélectrique d'appel,
**caractérisé en ce que** la mémoire commune de codes d'adresses est divisée en trois sections, une première section comprenant des canaux auxquels on peut avoir accès du côté du récepteur d'une manière générale, sans activation et gratuitement, une deuxième section comprenant des canaux auxquels on peut avoir accès de manière groupée, après une première activation, gratuitement, et une troisième section comprenant des canaux auxquels on peut avoir accès individuellement, après l'activation seulement.

2. Procédé selon la revendication 1, **caractérisé en ce que** les codes d'adresse pour chaque fréquence utilisée forment ensemble la mémoire commune de codes d'adresse, qui est à la disposition de chaque utilisateur du service radioélectrique d'appel.

3. Procédé selon la revendication 1 ou 2, **caractérisé en ce qu'**un code d'adresse de référence est fixé à l'intérieur de la mémoire commune de codes d'adresse, à partir duquel d'autres codes d'adresse ont chacun un décalage égal à un multiple d'une valeur spécifiée.

4. Procédé selon la revendication 3, **caractérisé en ce qu'**on affecte à chaque information à valeur ajoutée à recevoir un canal qui correspond à un code d'adresse défini de la mémoire commune de codes d'adresse, chaque code d'adresse affecté à un canal pouvant être défini grâce à l'indication du code d'adresse de référence et du décalage correspondant.

5. Procédé selon l'une des revendications 1 à 4, **caractérisé en ce que** les canaux pour la réception des informations à valeur ajoutée sont divisés en canaux gratuits et en canaux payants.

6. Procédé selon l'une des revendications 1 à 5, **caractérisé en ce qu'**une transmission des informations à valeur ajoutée se fait en format texte.

7. Procédé selon l'une des revendications 1 à 6, **caractérisé en ce qu'**une libération individuelle de tous les canaux payants se fait par l'intermédiaire d'un seul code d'adresse défini.

8. Procédé selon l'une des revendications 1 à 7, **caractérisé en ce qu'**on affecte à des canaux payants individuels ou à des groupes de canaux payants une date de fin d'activation grâce à laquelle la durée d'utilisation de canaux payants est limitée.

9. Procédé selon la revendication 8, **caractérisé en ce qu'**une synchronisation est effectuée par le récepteur avant la réception des canaux, grâce à la réception de la date actuelle, les canaux dont la date de fin d'activation est passée étant supprimés de la matrice de canaux après chaque synchronisation.

10. Procédé selon l'une des revendications 3 à 9, **caractérisé en ce qu'**un récepteur approprié pour le procédé, pour recevoir les informations à valeur ajoutée, recherche à partir du canal voulu, d'un code d'adresse de référence connu et du décalage le code d'adresse associé au canal.

11. Procédé selon l'une des revendications 1 à 10, **caractérisé en ce que** les canaux voulus sont mis en mémoire par l'utilisateur dans le récepteur, par groupes, suivant le nombre d'emplacements de mémoire programmables.
